(19) Europäisches Patentamt
European Patent Office
Office européen des brevets

(11) **EP 2 291 589 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(21) Anmeldenummer: **08874859.5**

(22) Anmeldetag: **21.11.2008**

(51) Int Cl.:
*F16H 3/083* (2006.01)  *F16H 3/089* (2006.01)
*F16D 7/10* (2006.01)  *B25D 16/00* (2006.01)

(86) Internationale Anmeldenummer:
**PCT/EP2008/066006**

(87) Internationale Veröffentlichungsnummer:
**WO 2010/000341 (07.01.2010 Gazette 2010/01)**

(54) **MEHRGANG-GETRIEBEVORRICHTUNG UND WERKZEUGMASCHINE**

MULTI-GEAR TRANSMISSION DEVICE AND POWER TOOL

DISPOSITIF DE TRANSMISSION À PLUSIEURS VITESSES ET MACHINE-OUTIL ASSOCIÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.06.2008 DE 102008040031**

(43) Veröffentlichungstag der Anmeldung:
**09.03.2011 Patentblatt 2011/10**

(73) Patentinhaber: **Robert Bosch GmbH**
**70442 Stuttgart (DE)**

(72) Erfinder: **BRAUN, Willy**
**72149 Neustetten (DE)**

(56) Entgegenhaltungen:
**DE-A1- 2 412 872    DE-A1- 4 302 083**
**DE-C1- 3 832 202**

**Beschreibung**

Stand der Technik

Die Erfindung betrifft eine Mehrgang-Getriebevorrichtung, insbesondere eine Zweigang-Getriebevorrichtung, zur Übertragung eines Antriebsdrehmoments von einer Eingangsseite auf eine Ausgangsseite der Mehrgang-Getriebevorrichtung mit mindestens zwei wählbaren Übersetzungsverhältnissen und einer Mehrstufen-Kupplungsvorrichtung, insbesondere eine Zweistufen-Kupplungsvorrichtung, die mindestens zwei unterschiedliche, wählbare Grenzdrehmomente aufweist.

Es sind bereits mehrere verschiedene Mehrgang-Getriebevorrichtungen für Werkzeugmaschinen bekannt. Unter einer Mehrgang-Getriebevorrichtung wird dabei insbesondere eine Getriebevorrichtung verstanden, die mindestens zwei wählbare Übersetzungsverhältnisse GR1, GR2 zwischen einer Eingangsseite der Getriebevorrichtung und einer Ausgangsseite der Getriebevorrichtung zur Verfügung stellt. Jedes der Übersetzungsverhältnisse wird dabei insbesondere als ein Gang der Mehrgang-Getriebevorrichtung verstanden.

Aus der EP 1 163 980 A2 ist beispielsweise eine Zweigang-Getriebevorrichtung bekannt, die zwei Übersetzungsradpaare aufweist. Jedes der Übersetzungsradpaare besteht dabei aus einem ersten Übersetzungsrad und aus einem zweiten Übersetzungsrad. Die Übersetzungsräder sind dabei als Stirnräder, insbesondere Stirnzahnräder ausgeführt. Jedes der Übersetzungszahnradpaare weist ein unterschiedliches Zahnungsverhältnis TR1, TR2 auf, sodass voneinander abweichende Übersetzungsverhältnisse GR1, GR2 realisiert werden. Die jeweils ersten Übersetzungsräder sind dabei auf einer ersten Getriebewelle drehfest angeordnet. Die zweiten Übersetzungsräder sind drehbar auf einer Hohlwelle als zweite Getriebewelle angeordnet. In Inneren der Hohlwelle ist ein Schiebeelement angeordnet, mit welchem wählbar eines der beiden zweiten Übersetzungsräder drehfest mit der Hohlwelle verbunden werden kann. An einem Ende der Hohlwelle ist ein Kegelritzel vorgesehen, welches mit einem Kegelscheibenrad kämmt. Das Kegelscheibenrad ist dabei drehfest an einer, drehbar gelagerten Werkzeugantriebswelle, insbesondere einem Hammerrohr angeordnet. Das größere der ersten Übersetzungszahnräder kämmt mit einem Stirnradritzel, welches auf einer Motorwelle einer Antriebseinheit, insbesondere eines Elektromotors vorgesehen ist. Die ersten Übersetzungsräder definieren so eine Eingangsseite der Mehrgang-Getriebevorrichtung, während die zweiten Übersetzungszahnräder eine Ausgangsseite der Mehrgang-Getriebevorrichtung festlegen. Durch die wählbare brehfestlegung eines der beiden zweiten Übersetzungsräder mit der Hohlwelle wird nun ein Antriebsdrehmoment MA der Antriebseinheit auf die Werkzeugantriebswelle übertragen.

Weiterhin sind Getriebevorrichtungen bekannt, die eine Mehrstufen-Kupplungsvorrichtung, insbesondere eine Zweistufen-Kupplungsvorrichtung umfassen. Die Mehrstufen-Kupplungsvorrichtungen weisen dabei mindestens zwei unterschiedliche, wählbare Grenzdrehmomente MG1, MG2 auf, die zwischen einer Eingangsseite der Getriebevorrichtung und einer Ausgangsseite der Getriebevorrichtung wirken. Übersteigt das aktuell anliegende Antriebsdrehmoment MA das aktuell ausgewählte Grenzdrehmoment MGIst, unterbricht die Mehrstufen-Kupplungsvorrichtung die Drehmomentübertragung zwischen der Eingangs- und der Ausgangsseite.

Aus DE 38 32 302 C1 ist beispielsweise eine Zweistufen-Kupplungsvorrichtung bekannt, welche zwei koppelbare, seriell auf einer Kupplungswelle angeordnete Überrastkupplungen aufweist. Die Überrastkupplungen werden dabei über einen schaltbaren, axial verschieblichen Stift, welcher in einem radial äußeren Bereich der Überrastkupplung angeordnet ist, wahlweise miteinander verbunden und/oder an einem Gehäuse festgelegt. Dadurch werden abhängig von einer Schaltposition des Stiftes, bezogen auf die Kupplungswelle zwei unterschiedliche Grenzdrehmomente MG1, MG2 wirksam.

Aus DE 43 02 083 A1 ist eine Zweistufen-Kupplungsvorrichtung gemäß dem Oberbegriff des Anspruchs 1 bekannt.

Vorteile der Erfindung

Die erfindungsgemäße Mehrgang-Getriebevorrichtung mit den Merkmalen des Hauptanspruchs hat den Vorteil, dass durch eine Aufnahme der Mehrstufen-Kupplungsvorrichtung in den Übersetzungsradpaaren der Mehrgang-Getriebevorrichtung eine sehr kompakte Ausführung erzielt wird. Durch diese kompakte Ausführung kann die erfindungsgemäße Mehrgang-Getriebevorrichtung sehr leicht in Werkzeugmaschinen, insbesondere in Handwerkzeugmaschinen integriert werden. Erfindungsgemäß weist die Mehrstufen-Kupplungsvorrichtung dabei mindestens zwei Kupplungsanordnungen auf, welche jeweils ein Eingangsrad umfasst, wobei jedes Eingangsrad jeweils drehbar auf der zweiten Getriebewelle angeordnet ist. Jedes Eingangsrad ist dabei als Nutglocke ausgeführt, wobei an einer Innenseite der Nutglocke ein Rastprofil vorgesehen ist.

Jedes der mindestens zwei Übersetzungsradpaare weist dabei ein erstes Übersetzungsrad und ein zweites Übersetzungsrad auf. Dabei ist jeweils das erste Übersetzungsrad auf einer ersten, eine Eingangsseite der erfindungsgemäßen Mehrgang-Getriebevorrichtung bildende Getriebewelle angeordnet. Das jeweils zweite Übersetzungsrad ist auf einer zweiten, eine Ausgangsseite der erfindungsgemäßen Mehrgang-Getriebevorrichtung bildende Getriebewelle der Mehrgang-Getriebevorrichtung angeordnet. In besonders bevorzugter Weise kämmt das jeweils erste Übersetzungsrad mit dem jeweils zweiten Übersetzungsrad eines jeden Übersetzungsradpaares permanent miteinander, wodurch die erfindungsgemäße Mehrgang-Getriebevorrichtung synchronisiert wird.

Sind die ersten Übersetzungsräder der jeweiligen Übersetzungsradpaare drehfest mit der ersten Getriebewelle verbunden, so kann dadurch eine kostengünstige Ausgestaltung der erfindungsgemäßen Mehrgang-Getriebevorrichtung erreicht werden. Vorzugsweise sind die ersten Übersetzungsräder einteilig mit der ersten Getriebewelle ausgeführt. Insbesondere bilden sie dabei ein Stufenrad. Unter einem Stufenrad wird dabei insbesondere ein einteilig ausgeführtes Übersetzungsradpaar verstanden, bei dem die beiden Übersetzungsräder einen voneinander abweichenden Raddurchmesser D1, D2 aufweisen.

In besonders vorteilhafter Weise sind die zweiten Übersetzungsräder der Übersetzungsradpaare als jeweils ein Radring ausgeführt. Dabei sind an jedem der zwei Übersetzungsräder Drehfestlegungsmittel vorgesehen. Diese Drehfestlegungsmittel sind insbesondere als eine, vorzugsweise mehrere Drehfestlegungsnuten ausgeführt.

Eine robuste Ausführung der erfindungsgemäßen Mehrgang-Getriebevorrichtung wird dadurch erreicht, dass jede Nutglocke einen scheibenförmigen Innenraum aufspannt. Dabei sind die scheibenförmigen Innenräume zweier Nutglocken einander zugewandt angeordnet.

In einer besonders funktionalen Ausführung nehmen die Eingangsräder der Mehrstufen-Kupplungsvorrichtung eine Kupplungsscheibe auf. Die Kupplungsscheibe weist dabei mindestens zwei Rastelementebenen auf, auf welchen jeweils mindestens ein, vorzugsweise mehrere elastische Rastelemente angeordnet sind. Die Kupplungsscheibe ist dabei drehfest mit der zweiten Getriebewelle verbunden. Insbesondere kann die Kupplungsscheibe auch einteilig mit der zweiten Getriebewelle ausgeführt sein.

Wirken die elastischen Rastelemente jeder Rastelementebene mit dem Rastprofil genau eines Eingangsrades zusammen, so dass bei einer Drehbewegung des jeweiligen Eingangsrades um die zweite Getriebewelle ein maximales Grenzdrehmoment MG zwischen dem Eingangsrad und der Kupplungsscheibe übertragbar ist, so wird eine besonders funktionale Ausgestaltung der erfindungsgemäßen Mehrgang-Getriebevorrichtung erreicht.

Vorteilhafterweise weist jedes Eingangsrad der Mehrstufen-Kupplungsvorrichtung Drehmitnahmemittel auf. Insbesondere können diese Drehmitnahmemittel als eine, vorzugsweise mehrere Drehmitnahmenuten ausgeführt sein.

Zur Gewährleistung einer besonders einfachen Bedienbarkeit der erfindungsgemäßen Mehrgang-Getriebevorrichtung ist ein Umschaltmittel vorgesehen, mit welchem zwischen den mindestens zwei Übersetzungsverhältnissen GR1, GR2 und/oder den mindestens zwei Grenzdrehmomenten MG1, MG2 der erfindungsgemäßen Mehrgang-Getriebevorrichtung umgeschaltet werden kann.

In einer kostengünstigen Ausführung ist das Umschaltmittel als ein Schaltring ausgeführt. Dieser Schaltring weist ein Eingriffsmittel auf, welches mit den Drehfestlegungsmitteln mindestens eines zweiten Übersetzungsrades und/oder mit den Drehmitnahmemitteln mindestens eines Eingangsrades der Mehrstufen-Kupplungsvorrichtung wirkverbunden werden kann.

Eine besonders kompakte Ausführung wird erreicht, wenn das Umschaltmittel entlang der zweiten Getriebewelle axial verschieblich, insbesondere zwischen mindestens zwei Übersetzungsrädern axial verschieblich angeordnet ist.

In einer besonders bevorzugten Weiterentwicklung der Mehrgang-Getriebevorrichtung ist eine Betätigungsvorrichtung, insbesondere eine mechanische Betätigungsvorrichtung vorgesehen. Die Betätigungsvorrichtung umfasst mindestens ein Betätigungsmittel, welches mit dem Umschaltmittel derart in Eingriff steht, dass dieses zwischen mindestens zwei, vorzugsweise mehreren Schaltstellungen SP1, SP2 bewegt werden kann.

In einer besonders bevorzugten anderen Weiterentwicklung der erfindungsgemäßen Mehrgang-Getriebevorrichtung umfasst die Betätigungsvorrichtung mindestens eine elektrisch antreibbare Aktoreinheit.

In einer weiteren bevorzugten Weiterentwicklung der erfindungsgemäßen Mehrgang-Getriebevorrichtung ist mindestens ein Einstellmittel vorgesehen, mit welchem eine Rastkraft FR der elastischen Rastelemente wenigstens einer Rastelementebene eingestellt werden kann. Insbesondere kann die Rastkraft zwischen wenigstens zwei unterschiedlichen Rastkräften FR1, FR2 eingestellt werden.

In einem weiteren Aspekt der vorliegenden Erfindung ist eine Werkzeugmaschine, insbesondere eine Handwerkzeugmaschine mit einer Antriebseinheit, einer Werkzeugantriebswelle und einer erfindungsgemäßen Mehrgang-Getriebevorrichtung ausgerüstet. Wird die Antriebseinheit über die Mehrgang-Getriebevorrichtung zu einem schaltbaren Drehantrieb der Werkzeugantriebswelle mit der Werkzeugantriebswelle wirkverbunden, so wird eine besonders vorteilhafte und flexibel einsetzbare Werkzeugmaschine erhalten. Insbesondere werden dazu die Antriebseinheit mit der Eingangsseite der erfindungsgemäßen Mehrgang-Getriebevorrichtung und die Werkzeugantriebswelle mit der Ausgangsseite der erfindungsgemäßen Mehrgang-Getriebevorrichtung gekoppelt.

In einer besonders komfortablen Weiterentwicklung der erfindungsgemäßen Werkzeugmaschine ist eine Auswahlvorrichtung vorgesehen. Mit der Auswahlvorrichtung kann ein Benutzer zwischen den mindestens zwei Übersetzungsverhältnissen GR1, GR2 und/oder den mindestens zwei Grenzdrehmomenten MG1, MG2 der erfindungsgemäßen Mehrgang-Getriebevorrichtung auswählen. Vorzugsweise weist die Auswahlvorrichtung mindestens ein, an einem Maschinengehäuse der Werkzeugmaschine für den Benutzer zugänglich angeordnetes Auswahlelement auf.

Ist darüber hinaus in der erfindungsgemäßen Werkzeugmaschine eine Einstelleinrichtung vorgesehen, über welche der Benutzer an einem Einstellmittel die Rastkraft mindestens eines, vorzugsweise aller elastischen Rastelemente wenigstens einer Kupplungsanordnung einstellen kann, so wird der Bedienkomfort erheblich gesteigert.

Eine besonders leicht handhabbare, erfindungsgemäße Werkzeugmaschine wird dadurch erreicht, dass das Einstellmittel mit der Auswahleinrichtung zusammenwirkt, insbesondere in diese integriert ist.

Ausführungsbeispiele der Erfindung sind in der Zeichnung dargestellt und in der folgenden Beschreibung näher erläutert. Es zeigen:

Figur 1          eine schematische Seitenansicht eines Bohrhammers,

Figur 2          eine perspektivische Ansicht einer erfindungsgemäßen Mehrgang-Getriebevorrichtung als erstes Ausführungsbeispiel,

Figur 3          einen Schnitt durch die Mehrgang-Getriebevorrichtung nach Figur 2,

Figur 4          eine Explosionsdarstellung der erfindungsgemäßen Getriebevorrichtung nach dem ersten Ausführungsbeispiel entlang der zweiten Getriebewelle,

Figur 5a bis 5d  die zweiten Übersetzungsräder mit der Mehrstufen-Kupplungsvorrichtung nach dem ersten Ausführungsbeispiel in vier unterschiedlichen Schaltstellungen,

Figur 6          eine seitliche Schnittdarstellung eines zweiten Ausführungsbeispiels einer erfindungsgemäßen Mehrgang-Getriebevorrichtung,

Figur 7          eine seitliche Schnittdarstellung eines dritten Ausführungsbeispiels einer erfindungsgemäßen Mehrgang-Getriebevorrichtung.

Beschreibung der Ausführungsbeispiele

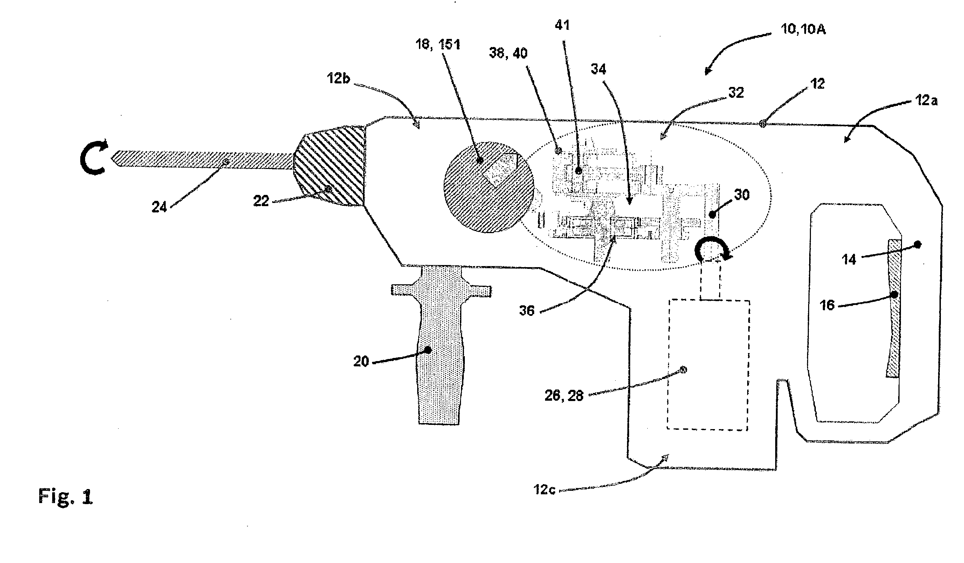

Figur 1 zeigt eine schematische Seitenansicht eines Bohrhammers 10a als Beispiel einer Werkzeugmaschine 10, insbesondere einer erfindungsgemäßen Handwerkzeugmaschine. Der Bohrhammer 10a weist dabei ein Maschinengehäuse 12 auf. An einem hinteren Bereich 12a des Maschinengehäuses 12 ist ein Haupthandgriff 14 vorgesehen, an welchem ein Hauptbedienelement 16 angeordnet ist.

An einem vom Haupthandgriff 14 entfernten, vorderen Ende 12b des Maschinengehäuses 12 ist ein Betriebsartenschalter 18 vorgesehen. In der hier gezeigten Ausführung ist der Betriebsartenschalter 18 als ein Drehschalter ausgeführt, wobei auch andere Schalterarten wie insbesondere Schiebeschalter, Rastschalter, Auswahlhebel und/oder elektronische Schaltelemente zum Einsatz kommen können. Darüber hinaus ist an dem vorderen Bereich 12b ein Zusatzhandgriff 20 angeordnet. An einer vorderen Stirnfläche des vorderen Bereichs 12b ist ein drehend antreibbarer Werkzeughalter 22 vorgesehen. Im Werkzeughalter 22 ist ein Einsatzwerkzeug 24 wechselbar aufgenommen.

In einem dem Haupthandgriff 14 zugewandten unteren Bereich 12c des Maschinengehäuses ist eine Antriebseinheit 26, insbesondere ein Elektromotor 28 angeordnet. Dieser ist in Figur 1 gestrichelt dargestellt. Die Antriebseinheit 26, 28 treibt über eine Motorwelle 30 eine Bewegungsumwandlungsvorrichtung 32 an. Die Bewegungsumwandlungsvorrichtung 32 umfasst eine erfindungsgemäße Mehrgang-Getriebevorrichtung 34. Die Mehrgang-Getriebevorrichtung 34 weist dabei erfindungsgemäß eine Mehrstufen-Kupplungsvorrichtung 36 auf.

Die Mehrgang-Getriebevorrichtung 34 überträgt dabei ein Antriebsdrehmoment MA der Antriebseinheit 26, 28 auf eine Werkzeugantriebswelle 38, welche im vorliegenden Beispiel als ein Hammerrohr 40 ausgeführt ist. Im Hammerrohr 40 ist im vorliegenden Ausführungsbeispiel einer erfindungsgemäßen Werkzeugmaschine ein Schlagwerk, insbesondere ein Luftpolsterschlagwerk aufgenommen, wie es hinlänglich bekannt ist. Von dem Schlagwerk ist in Figur 1 nur eine Schlagwerkskolbeneinheit 41 abgebildet. Der Werkzeughalter 22 ist drehfest, insbesondere lösbar drehfest mit der Werkzeugantriebswelle 38 verbunden. Das Einsatzwerkzeug 24 wiederum ist wechselbar, drehfest im Werkzeughalter 22 aufgenommen. Auf diese Weise kann ein Drehmoment über die Werkzeugantriebswelle 38 und den Werkzeughalter 22 auf das aufgenommene Einsatzwerkzeug 24 übertragen werden.

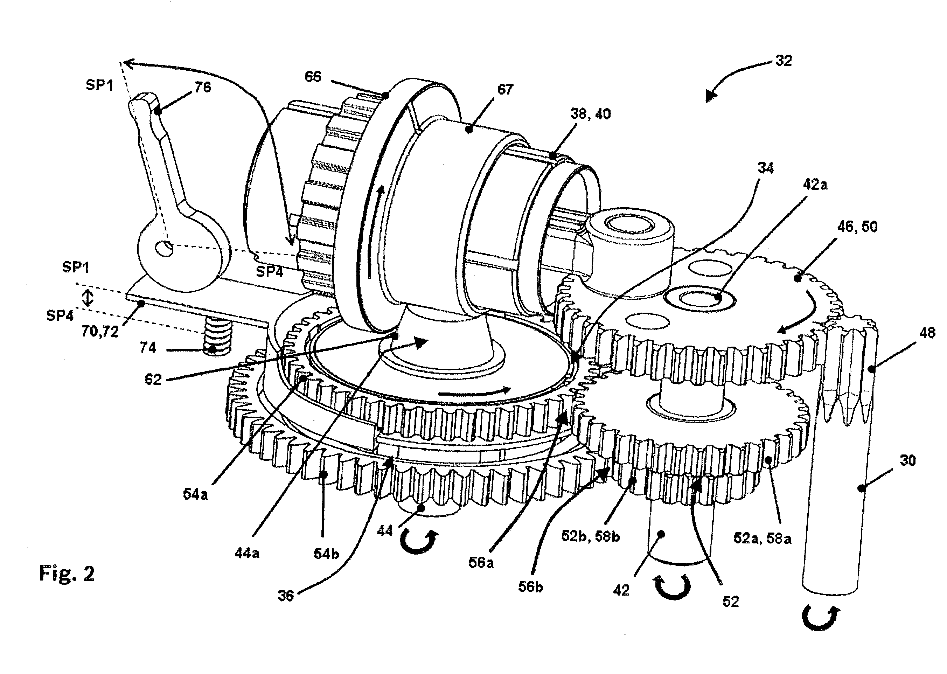

Figur 2 zeigt eine Bewegungsumwandlungseinrichtung 32, wie sie aus Figur 1 bekannt ist. Die Bewegungsumwandlungsvorrichtung 32 weist dabei eine erfindungsgemäße Mehrgang-Getriebevorrichtung 34 auf. Die Mehrgang-Getriebevorrichtung 34 umfasst eine erste Getriebewelle 42 und eine parallel zur ersten Getriebewelle 42 angeordnete zweite Getriebewelle 44. Die erste Getriebewelle 42 ist im vorliegenden Ausführungsbeispiel parallel zur Motorwelle 30 der Antriebseinheit 26, 28 im Maschinengehäuse 12 ausgerichtet angeordnet. Die Getriebewellen 42 und 44 sind dabei frei drehbar im Maschinengehäuse 12 gelagert, wobei die Lager selbst in der Figur 2 nicht dargestellt sind.

An einem ersten Ende 42a der ersten Getriebewelle 42 ist ein, als ein Stirnrad ausgeführtes Exzenterrad 46 angeordnet und vorzugsweise drehfest mit der ersten Getriebewelle 42 verbunden. An der Motorwelle 30 ist ein Abtriebsritzel 48 vorgesehen. Im vorliegenden Beispiel ist das Abtriebsritzel 48 einteilig mit der Motorwelle ausgeführt, wobei auch mehrteilige Ausführungen nicht ausgeschlossen sind. Das Abtriebsritzel 48 überträgt eine Drehbewegung der Motorwelle 30 und damit das Antriebsdrehmoment MA der Antriebseinheit 26, 28 auf das Exzenterrad 46.

Durch die Drehfestlegung des Exzenterrads 46 an der ersten Getriebewelle 42 definiert dieses eine Eingangsseite der erfindungsgemäßen Mehrgang-Getriebevorrichtung 34. Auf der ersten Getriebewelle 42 ist weiters ein Stufenrad 52 angeordnet und vorzugsweise drehfest mit der ersten Getriebewelle 42 gekoppelt. Das Stufenrad 52 ist dabei unterhalb des Exzenterrads 46 angeordnet. Das Stufenrad 52 weist ein erstes Stirnrad 52a und ein zweites Stirnrad 52b auf. Im vorliegenden Beispiel ist ein Durchmesser D11 des ersten Stirnrades 52a größer gewählt als ein Durchmesser D12 des zweiten Stirnrades 52b.

Auf der zweiten Getriebewelle 44 ist die erfindungsgemäße Mehrstufen-Kupplungsvorrichtung 36 angeordnet. In Figur 2 ist die Mehrstufen-Kupplungsvorrichtung 36 in einem montierten Zustand abgebildet, so dass im Wesentlichen nur ein erster, als ein Stirnrad ausgebildeter Radring 54a und ein zweiter, als ein Stirnrad ausgebildeter Radring 54b zu sehen sind. Die Radringe 54a, 54b sind entlang der zweiten Getriebewelle 44 in axialer Schichtung um die zweite Getriebewelle 44 angeordnet.

Die Radringe 54a, 54b sind dabei so ausgelegt, dass sie jeweils mit einem der Stirnräder 52a, 52b des Stufenrads 52 zusammenwirken. Dabei wird unter "ausgelegt" insbesondere angeordnet und/oder ausgeführt verstanden. Unter "zusammenwirken" ist insbesondere kämmen zu verstehen. Das Stirnrad 52a und der Radring 54a bilden so ein erstes Übersetzungsradpaar 56a der erfindungsgemäßen Mehrgang-Getriebevorrichtung 34. Ein zweites Übersetzungsradpaar 56b wird im vorliegenden Beispiel durch das Stirnrad 52b und den Radring 54b gebildet. Im Zusammenhang mit der erfindungsgemäßen Mehrgang-Getriebevorrichtung 34 werden daher die Stirnräder 52a, 52b auch als sogenannte erste Übersetzungsräder 58a, 58b bezeichnet. Die Radringe 54a, 54b der Mehrstufen-Kupplungsvorrichtung 36 sind in diesem Zusammenhang auch als zweite Übersetzungsräder 60a, 60b zu verstehen. Der Radring 54a weist hierbei einen Durchmesser D21 seiner Stirnradverzahnung 55a auf, während der Radring 54b durch einen Durchmesser D22 seiner Stirnradverzahnung 55b gekennzeichnet ist. Die Durchmesser D11 und D21 des ersten Übersetzungsradpaares 56a sowie die Durchmesser D12 und D22 des zweiten Übersetzungsradpaares 56b sind dabei insbesondere so abgestimmt, dass ein konstanter Abstand der ersten Getriebewelle 42 von der zweiten Getriebewelle 44 eingehalten ist.

An einem Ende 44a der zweiten Getriebewelle 44 ist darüber hinaus ein als Kegelrad ausgebildetes Abtriebsrad 62 angeordnet, vorzugsweise drehfest mit der zweiten Getriebewelle verbunden. Das Abtriebsrad 62 definiert dabei die Ausgangsseite 64 der erfindungsgemäßen Mehrgang-Getriebevorrichtung 34.

Auf der Werkzeugantriebswelle 38 ist ein, vorzugsweise an der Werkzeugantriebswelle 38 drehfestlegbares Drehantriebsrad 66 angeordnet. Das Drehantriebsrad 66 kämmt mit dem Abtriebsrad 62, so dass die Werkzeugantriebswelle 38 mittels der erfindungsgemäßen Mehrgang-Getriebevorrichtung 34 drehend angetrieben werden kann. Im hier gezeigten Ausführungsbeispiel ist das Drehantriebsrad drehfest, vorzugsweise einteilig mit einer Schalthülse 67 ausgeführt. Die Schalthülse 67 ist axial verschiebbar, drehfest auf der Werkzeugantriebswelle 38 angeordnet. Mittels einer Axialverschiebung der Schalthülse 67 entlang der Werkzeugantriebswelle 67 kann das Drehantriebsrad 66 mit dem Abtriebsrad 62 in Eingriff gebracht oder der Eingriff unterbrochen werden. Auf diese Weise ist der Drehantrieb der Werkzeugantriebswelle 38 schaltbar ausgebildet.

Die Mehrgang-Getriebevorrichtung 34 nach Figur 2 weist weiterhin eine Betätigungsvorrichtung 68 auf. Die Betätigungsvorrichtung 68 umfasst dabei ein Betätigungsmittel 70, welches im vorliegenden Beispiel als eine Schaltgabel 72 ausgeführt ist. Das Betätigungsmittel 70, 72 wird durch ein Rückstellelement 74, welches im vorliegenden Beispiel als eine Schraubenfeder ausgeführt ist, in eine vordefinierte erste Schaltposition SP1 gebracht. Über ein Hebelelement 76 kann das Betätigungsmittel 70, 72 in mindestens eine weitere Schaltposition SP2 verbracht werden.

Auf dem Exzenterrad 46 der Bewegungsumwandlungsvorrichtung 32 ist in einem radialen Abstand von einer ersten Getriebeachse 78 eine Exzenterpin 80 angeordnet. An dem Exzenterpin 80 greift ein Pleuel 82 an, wobei der Pleuel 82 insbesondere mit einem Ende am Exzenterpin beweglich befestigt ist. Mit einem anderen Ende ist der Pleuel 82 beweglich mit der Kolbeneinheit 41 verbunden. Eine Anordnung bestehend aus mindestens dem Exzenterrad 46, dem Exzenterpin 80 und dem Pleuel 82 wird auch als Schlagwerksantriebseinheit 84 verstanden. Insbesondere kann die Schlagwerksantriebeinheit 84 auch als Bestandteil der Bewegungsumwandlungsvorrichtung 32 verstanden werden.

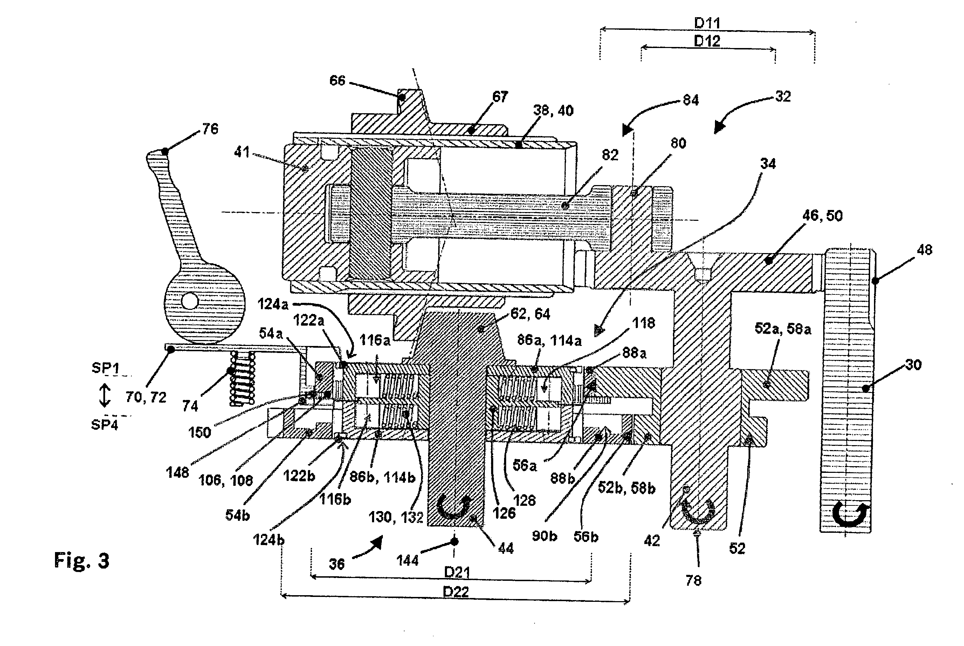

Figur 3 zeigt eine seitliche Schnittansicht der Bewegungsumwandlungsvorrichtung 32 mit der erfindungsgemäßen Mehrgang-Getriebevorrichtung 34 aus Figur 2. In dieser Ansicht ist insbesondere ein Aufbau der Mehrstufen-Kupplungsvorrichtung 36 zu erkennen.

Die Mehrstufen-Kupplungsvorrichtung 36 weist zwei Eingangsräder 86a, 86b auf, welche innerhalb der Radringe 54a, 54b um die zweite Getriebewelle 44 angeordnet sind. Jedes Eingangsrad 86a, 86b ist dabei frei drehbar auf der zweiten Getriebewelle 44 gelagert.

Im vorliegenden Ausführungsbeispiel unterscheiden sich die Radringe 54a, 54b außer in ihren Durchmessern D21, D22 auch in ihrem Querschnitt 88a, 88b. Die Querschnitte 88a, 88b sind dabei so gestaltet, dass die Radringe 54a, 54b einen jeweils im Wesentlichen gleich großen Innendurchmesser D1, D2 freigeben. Dazu weist der Querschnitt 88b des Radrings 54b einen Ausnehmungsbereich 90b auf.

Die Radringe 54a, 54b weisen an einer radialen Innenseite 92a, 92b, insbesondere einer radialen Innenfläche 93a, 93b jeweils mindestens ein, vorzugsweise mehrere Drehfestlegungsmittel 94a, 94b auf. Jedes Eingangsrad 86a, 86b weist an einer radialen Außenseite 96a, 96b, insbesondere einer radialen Außenfläche 97a, 97b mindestens ein, vorzugsweise mehrere Drehmitnahmemittel 98a, 98b auf. Im vorliegenden Beispiel sind die Drehfestlegungsmittel 94a, 94b als Drehfestlegungsnuten 100a, 100b ausgeführt, wobei die Drehfestlegungsnuten 100a, 100b vorzugsweise im Wesentlichen gleichmäßig über den Umfang der Innenflächen 93a, 93b der Radringe 54a, 54b verteilt in die Innenflächen 93a, 93b eingebracht sind. Die Drehmitnahmemittel 98a, 98b sind in der vorliegenden Ausführungsform analog als Drehmitnahmenuten 102a, 102b ausgebildet. Die Drehmitnahmenuten 102a, 102b sind vorzugsweise im Wesentlichen gleichmäßig über den Umfang der Außenflächen 97a, 97b der Eingangsräder 86a, 86b in die Außenflächen 97a, 97b eingebracht. In einer besonders bevorzugten Ausführung sind die Drehfestlegungsnuten 100a, 100b und/oder die Drehmitnahmenuten 102a, 102b eines jeden, aus je einem Radring 54a, 54b und je einem Eingangsrad 86a, 86b bestehenden Radpaares 104a, 104b, in gleicher Anzahl und gleichmäßig über den Umfang der Innenflächen 93a, 93b und Außenflächen 97a, 97b verteilt.

Entlang der zweiten Getriebewelle 44 ist in axialer Richtung zwischen den Radpaaren 104a, 104b ein Umschaltmittel 106 begrenzt axial verschieblich angeordnet. Im vorliegenden Beispiel ist das Umschaltmittel 106 als ein Schaltring 108 ausgeführt. Der Schaltring 108 trägt an einem inneren Durchmesser 110 einen, vorzugsweise mehrere Eingriffskörper 112. In einer besonders bevorzugten Ausführung sind die Eingriffskörper 112 gleichmäßig über einen Umfang des Schaltrings 108 verteilt. Der mindestens eine Eingriffskörper 112 ist dabei so geformt ausgeführt, dass durch ein axiales Verschieben des Schaltrings 108 der Eingriffskörper 112 eine formschlüssige Verbindung mit mindestens einer Drehfestlegungsnut 100a, 100b und mindestens einer Drehmitnahmenut 102a, 102b herbeigeführt wird. Es sind auch Ausführungsformen denkbar, bei denen Eingriffskörper 112' vorgesehen sind, welche eine kraftschlüssige oder eine form- und kraftschlüssige Verbindung mit mindestens einer Drehfestlegungsnut 100a, 100b und mindestens einer Drehmitnahmenut 102a, 102b herbeigeführt werden kann.

Die Eingangsräder 86a, 86b der Mehrstufen-Kupplungsvorrichtung 36 sind in der in Fig. 3 dargestellten Ausführungsform als Nutglocken 114a, 114b ausgeführt. Jede Nutglocke 114a, 114b spannt einen scheibenförmigen Innenraum 116a, 116b auf, welcher sich als Kreisscheibe um die zweite Getriebewelle 44 erstreckt. In der vorliegenden Ausführung sind die Nutglocken 114a, 114b dabei axial so zu einander ausgerichtet, dass die beiden scheibenförmigen Innenräume 116a, 116b im Wesentlichen direkt an einander angrenzen. So wird ein Kupplungsinnenraum 118 gebildet. Die obere Nutglocke 114a stützt sich dabei axial gegen eine relativ zur Nutglocke 114a drehbaren Anlagefläche ab, welche am Abtriebsrad 62 vorgesehen ist. Die untere Nutglocke 114b wird an einem hier nicht gezeigten Axiallager im Maschinengehäuse 12 der Werkzeugmaschine 10 abgestützt. Gegen ein axiales Verrutschen der Radringe 54a, 54b gegenüber den zugeordneten Eingangsrädern 86a, 86b bzw. Nutglocken 114a, 114b nach einer Montage werden die Nutglocken 114a, 114b und zugehörigen Radringe 54a, 54b durch je einen Sicherungsring 122a, 122b gesichert, welcher in einer, jeweils an der Nutglocke 114a, 114b vorgesehenen Aufnahmenut 124a, 124b aufgenommen ist.

Im Kupplungsinnenraum 118 ist eine Kupplungsscheibe 126 vorgesehen. Die Kupplungsscheibe 126 ist dabei drehfest, insbesondere starr mit der zweiten Getriebewelle 44 verbunden. Insbesondere kann die Kupplungsscheibe 126 durch eine kraft-, form- und/oder stoffschlüssige Verbindung auf der zweiten Getriebewelle 44 angebracht sein. Es ist auch denkbar, dass die Kupplungsscheibe 126 einteilig, insbesondere einstückig mit der zweiten Getriebewelle 44 hergestellt ist. Dazu kommen insbesondere Sinter- und Spritzgusstechniken in Frage.

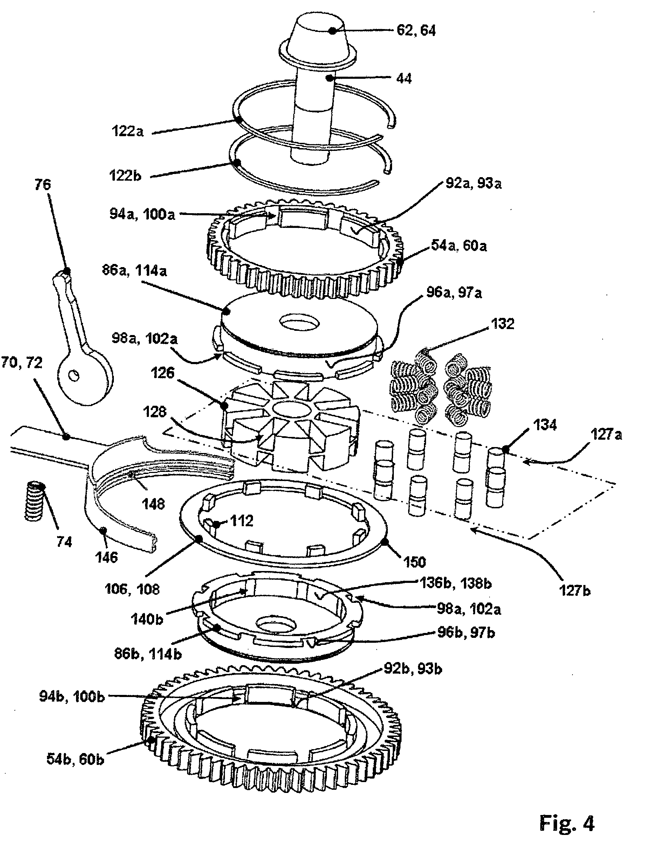

Wie in Figur 4 besonders gut zu sehen ist, sind in der Kupplungsscheibe 126 radial verlaufende, zum Außendurchmesser hin stirnseitig offene Ausnehmungen 128 vorgesehen. Im vorliegenden Ausführungsbeispiel weist die Kupplungsscheibe 126 zwei Rastelementebenen 127a, 127b von Ausnehmungen 128 auf. Darüber hinaus sind die Ausnehmungen 128 im Wesentlichen gleichmäßig über den Umfang verteilt, insbesondere radial symmetrisch angeordnet.

In jeder Ausnehmung 128 einer jeden Rastelementebene 127a, 127b ist ein elastisches Rastelement 130 aufgenommen. Die elastischen Rastelemente 130 sind hierbei als ein, mit einem Federelement 132 belasteter Rastkörper 134 ausgeführt. Im vorliegenden Beispiel ist das Federelement 132 als Schraubenfedern ausgebildet. Es kommen jedoch auch andersartige Federelemente 132 wie zum Beispiel Blattfedern, Elastomere und/oder Federkörper für eine erfindungsgemäße Mehrstufen-Kupplungsvorrichtung 36 in Frage. Die Rastkörper 134 sind im vorliegenden Beispiel als Rastzylinder ausgebildet, wobei in einer bevorzugten Ausführung insbesondere auch Rastkugeln und andere Rastkörperformen vorteilhaft sein können.

In einem montierten Zustand, wie er unter anderem in Figur 3 dargestellt ist, sind die elastischen Rastelement 130 mit einer Rastkraft FR vorgespannt in den Ausnehmungen 128 aufgenommen. An jeweils einer Innenfläche 136a, 136b der Nutglocken 114a, 114b ist jeweils ein Rastprofil 138a, 138b mit Rastvertiefungen 140a, 140b vorgesehen. Im gezeigten Ausführungsbeispiel ist jeweils ein Rastprofil 138a, 138b an einer in den Kupplungsinnenraum 118 weisenden Umfangsfläche vorgesehen. Wie in Figur 4 angedeutet, weist jedes Rastprofil 138a, 138b nutförmige Rastvertiefungen 140a, 140b auf. In Figur 4 ist dabei nur das Rastprofil 138b und die Rastvertiefungen 140b sichtbar dargestellt. Die Nutglocke 114a der erfindungsgemäßen Mehrgang-Getriebevorrichtung 34 ist analog ausgebildet. Diese Rastvertiefungen 140a, 140b sind dabei vorzugsweise ebenfalls gleichmäßig über den Umfang verteilt. Insbesondere ist Anzahl der Rastvertiefungen 140a, 140b gleich oder größer als die Anzahl der elastischen Rastelemente 130 in einer Rastelementebene 127a, 127b der Kupplungsscheibe 126. Eine Rastelementebene 127a, 127b bildet zusammen mit dem zugehörigen Rastprofil 138a, 138b der entsprechenden Nutglocke 114a, 114b bzw. dem Eingangrad 86a, 86b eine Kupplungsanordnung 142a, 142b. Im vorliegenden Beispiel umfasst die Mehrstufen-Kupplungsvorrichtung 36 demnach zwei Kupplungsanordnungen 142a, 142b.

In ihrer Wirkungsweise entspricht jede der Kupplungsanordnungen 142a, 142b einer aus der einschlägigen Literatur hinreichend bekannten Überrastkupplung. Die elastischen Rastelemente 130 drücken ihre Rastkörper 134 mit der vordefinierten Rastkraft FR in die vorgesehenen Rastvertiefungen 140a, 140b. In Abhängigkeit von der Rastkraft FR eines elastischen Rastelements, der Anzahl NR der elastischen Rastelemente 130, dem radialen Abstand RA der Rastvertiefungen 140a, 140b von einer zweiten Getriebeachse 144 und den Reibungs- und Rolleigenschaften der Rastkörper 134 in den Rastvertiefungen 140a, 140b ist im Wesentlichen ein Grenzdrehmoment MG bestimmt, bei der die Kupplungsanordnung 142a, 142b auslöst. Unter dem "Auslösen einer Kupplungsanordnung" wird hierbei insbesondere die Unterbrechung eines Kraftflusses bzw. Drehmomentübertragung vom Eingangsrad 86a, 86b der Kupplungsanordnung 142a, 142b auf die Kupplungsscheibe 126 und damit auf die zweite Getriebeachse 44 verstanden. Wird dieses Grenzdrehmoment überschritten, kommt es zu einem Überrasten des Eingangsrades 86a, 86b relativ zur Kupplungsscheibe 126.

Das Betätigungsmittel 70, 72 weist an einem gabelförmigen Ende 146 ein nutförmiges Eingriffsmittel 148 auf. In diesem Eingriffsmittel 148 ist eine Lippe 150 des Schaltrings 108 drehend beweglich aufgenommen. Wird das Hebelelement 76 von einer ersten Schaltstellung in eine andere Schaltstellung bewegt, so wird der Schaltring 108 in axialer Richtung entlang der zweiten Getriebewelle 44 derart verschoben, dass die Eingriffskörper 112 zwischen den verschiedenen Drehfestlegungsnuten 100a, 100b und/oder Drehmitnahmenuten 102a, 102b verschoben werden.

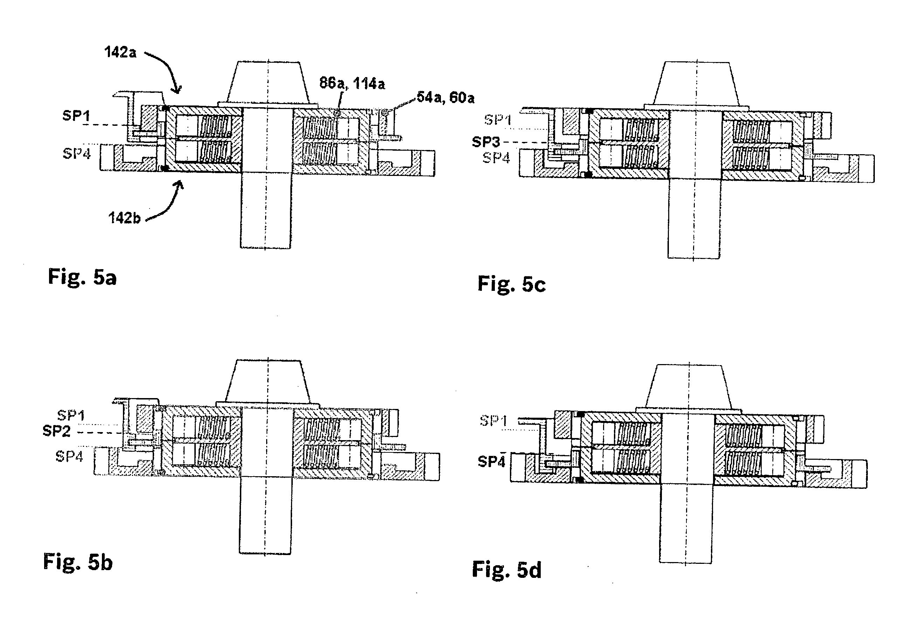

In den Figuren 5a bis 5d ist die Mehrstufen-Kupplungsvorrichtung 36 der erfindungsgemäßen Mehrgang-Getriebevorrichtung 34 in vier verschiedenen Schaltstellungen SP1, SP2, SP3 und SP4 des Schaltrings 108 dargestellt.

Figur 5a zeigt den Schaltring 108 in seiner ersten Schaltstellung SP1. In dieser Schaltstellung greifen die Eingriffskörper 112 in die Drehfestlegungsnuten 100a des oberen Radrings 54a und in die Drehmitnahmenuten 102a des oberen Eingangsrades 86a ein und verbinden diese drehfest miteinander. Der untere Radring 54b und das untere Eingangsrad 86b sind in dieser Schaltstellung nicht miteinander gekoppelt, so dass keine Drehmitnahme des unteren Eingangsrads 86b erfolgt. Ein Drehmomentübertrag kann in der Mehrstufen-Kupplungsvorrichtung 36 in Schaltstellung SP1 daher nur über die obere Kupplungsanordnung 142a erfolgen. Als aktuell anliegendes Grenzdrehmoment MGIst ist so das Grenzdrehmoment MG1 der Kupplungsanordnung 142a ausgewählt.

Mit der Auswahl des Radrings 54a wird in Schaltstellung SP1 gleichzeitig das erste Übersetzungsradpaar 56a der Mehrgang-Getriebevorrichtung 34 ausgewählt, da der Radring 54a das zweite Übersetzungsrad 60a des ersten Übersetzungsradpaares 56a ist. In der Ausführung nach den Figuren 1 bis 5 ist damit eine kleine Übersetzung GR1 wirksam, da der Durchmesser D11 des ersten Übersetzungsrades 58a größer ist als der Durchmesser D21 des zweiten Übersetzungsrades 60a. Es wird hierbei insbesondere von einem ersten, kleineren Gang der Mehrgang-Getriebevorrichtung 34 gesprochen.

Der Drehantrieb des Einsatzwerkzeugs 24 erfolgt in der Schaltstellung SP1 der erfindungsgemäßen Mehrgang-Getriebevorrichtung 34 wie folgt: Befindet sich die Antriebseinheit 26 in einem aktivierten Zustand, so überträgt die Motorwelle 30 über das Abtriebsritzel 48 eine Drehbewegung mit einem Antriebsdrehmoment MA' und einer Drehzahl U1 auf das Exzenterrad 46. Durch die drehfeste Verbindung des Exzenterrads 46 mit der ersten Getriebewelle 42 wird die Drehbewegung auf die erste Getriebewelle 42 übertragen, wobei sich eine Drehzahl U2 der ersten Getriebewelle 42 einstellt, welche von einem Übersetzungsverhältnis GRM von Abtriebsritzel 48 und Exzenterrad 46 abhängt. Dabei gilt:

$$U2 = GRM \cdot U1.$$

Da das Stufenrad 52 ebenfalls drehfest mit der ersten Getriebewelle 42 verbunden ist, wird die Drehbewegung auf das Stufenrad 52 übertragen. Das Stufenrad 52 umfasst dabei die beiden ersten Übersetzungsräder 58a, 58b der erfindungsgemäßen Mehrgang-Getriebevorrichtung 34, welche die Drehbewegung mit auf das jeweils zugeordnete zweite Übersetzungsrad 60a, 60b der Übersetzungsradpaare 56a, 56b übertragen. Die beiden Übersetzungsradpaare 56a, 56b weisen dabei unterschiedliche, im Wesentlichen durch die Durchmesser D11, D21, D12, D22 und/oder bei Zahnrädern den Zahnungszahlen ZN11, ZN21, ZN12, ZN22 bestimmte Übersetzungsverhältnisse GR1, GR2 auf, für die folgendes gilt:

$$GR1 = \frac{D21}{D11} = \frac{ZN11}{ZN21} \qquad GR2 = \frac{D22}{D12} = \frac{ZN12}{ZN22}.$$

Die Radringe 54a, 54b drehen sich daher mit jeweils einer unterschiedlichen Drehzahl U3a, U3b, die sich wie folgt berechnen:

$$U3a = GR1 \cdot U2 \qquad U3b = GR2 \cdot U2.$$

Im vorliegenden Beispiel ist, wie aus den Figuren 1 bis 5 ersichtlich wird, GR1 kleiner als GR2, so dass die Drehzahl U3b größer ist als die Drehzahl U3a. Da in Schaltstellung SP1 nur der Radring 54a mit dem Eingangsrad 86a drehfest verbunden ist, wird die Drehbewegung nur über die Kupplungsanordnung 142a auf die zweite Getriebewelle 44 übertragen. Die zweite Getriebewelle 44 und damit das mit dieser drehfest verbundene Abtriebsrad 62 drehen sich daher mit der Drehzahl U3a. Ist die Schalthülse 67 so verschoben, dass das Drehantriebsrad 66 mit dem Abtriebsrad 62 in Eingriff, so wird die Drehbewegung des Abtriebsrads 62 auf das Drehantriebsrad 66 und damit die Werkzeugantriebswelle 38 übertragen. Die Werkzeugantriebswelle 38 dreht dabei mit einer Drehzahl U4a, die sich aus der Drehzahl U3a und einem Übersetzungsverhältnis GRA des Abtriebsrads 62 und des Drehantriebsrads 66 ergibt:

$$U4a = GRA \cdot U3a = GRA \cdot GR1 \cdot GRM \cdot U1$$

Da die Werkzeugantriebswelle 38 und der Werkzeughalter 22 drehfest miteinander verbunden sind, dreht sich das Einsatzwerkzeug 24, welches drehfest im Werkzeughalter 22 aufgenommen ist, ebenfalls mit der Drehzahl U4a.

Ein maximal nutzbares Arbeitsdrehmoment MW am Einsatzwerkzeug 24 ist vorliegenden Fall durch das Grenzdrehmoment MG1 der Mehrstufen-Kupplungsvorrichtung 36 begrenzt, da nur die Kupplungsanordnung 142a die Drehbewegung überträgt. Umgekehrt kann es durch ein Blockieren des Einsatzwerkzeugs 24 auch nicht zu einem über das Grenzdrehmoment MG1 hinausgehenden Rückwirkungsmoment auf den Benutzer der erfindungsgemäßen Werkzeugmaschine 10 kommen. Blockiert das Einsatzwerkzeug 24, so steigt das Rückwirkungsmoment soweit an bis an der Mehrstufen-Kupplungsvorrichtung 36 das Grenzdrehmoment MG1 überschritten wird. In diesem Fall löst die Mehrstufen-Kupplungsvorrichtung 36 aus und unterbricht einen Kraftfluss von der Antriebseinheit 26 auf die Werkzeugantriebswelle 36.

Wird der Schaltring 108 von der Schaltstellung SP1 in eine Schaltstellung SP2 verschoben, so kommen die Eingriffskörper 112 auch mit den Drehmitnahmenuten 102b des Eingangsrads 86b in Eingriff. Dieser Zustand ist in Figur 5b dargestellt. Im Weiteren wird nur auf die Unterschiede zur Beschreibung von Figur 5a eingegangen. Da die grundsätzliche Funktionsweise identisch ist, wird auf die Beschreibung oben verwiesen.

In der Schaltstellung SP2 besteht eine Drehfestlegung zwischen dem Radring 54a und beiden Eingangsrädern 86a, 86b, so dass die Drehbewegung des Radrings 54a auf beide Eingangsräder 86a, 86b übertragen wird. Der Radring 54a dreht sich dabei mit der oben bestimmten Drehzahl U3a. Da nun beide Kupplungsanordnungen 142a, 142b in Eingriff stehen, wird ein Kraftfluss vom Radring 54a auf die zweite Getriebewelle 44 auf zwei Teilpfade aufgeteilt, die sich jeweils durch eine der beiden Kupplungsanordnungen 142a, 142b erstrecken. So stellt sich ein effektives Grenzdrehmoment MGmax an der Mehrstufenkupplungsvorrichtung 36 ein, welches im Wesentlichen gleich der Summe aus dem Grenzdrehmoment MG1 der Kupplungsanordnung 142a und dem Grenzdrehmoment MG2 der Kupplungsanordnung 142b ist.

Das Einsatzwerkzeug 24 dreht sich in der Schaltstellung SP2 des Schaltrings 108 mit der weiter oben angegebenen Drehzahl U4a, das maximal nutzbare Arbeitsmoment MW wird nun aber durch das höhere Grenzdrehmoment MGmax der Mehrstufen-Kupplungsvorrichtung 36 begrenzt.

Wird der Schaltring 108 in eine Schaltstellung SP3 verschoben, so kommen die Eingriffskörper 112 mit den Drehfestelegungsnuten 100a des Radrings 54a außer Eingriff, während sie mit den Drehfestlegungsnuten 100b des Radrings 54b in Eingriff kommen. Nach wie vor stehen die Eingriffskörper 112 jedoch mit den Drehmitnahmenuten 102a, 102b beider Eingangsräder 86a, 86b in Eingriff, so dass an der Mehrstufen-Kupplungsvorrichtung 36 das höhere Grenzdrehmoment MGmax wirksam ausgewählt ist, wie es im vorhergehenden Abschnitt beschrieben ist. Durch die Drehfestlegung des Radrings 54b mit den Eingangsrädern 86a, 86b wird die Drehbewegung der Antriebseinheit 26 in der Schaltstellung SP3 über das zweite Übersetzungsradpaar 56b übertragen. Für die Drehbewegung der zweiten Getriebewelle 44 ist nun das Übersetzungsverhältnis GR2 wirksam. Für die Drehbewegung des Einsatzwerkzeugs 24 ergibt sich analog zu vorherigen Betrachtung:

$$U4b = GRA \cdot U3b = GRA \cdot GR2 \cdot GRM \cdot U1$$

Das Einsatzwerkzeug 24 dreht sich in Schaltstellung SP3 des Schaltrings 108 also mit der höheren Drehzahl U4a, wobei das maximal nutzbare Arbeitsmoment MW durch das Grenzdrehmoment MGmax begrenzt ist.

Wird der Schaltring 108 in eine Schaltstellung SP4 verschoben, so kommen die Eingriffskörper 112 mit den Drehmitnahmenuten 102a des Eingangsrads 86a außer Eingriff. Die Eingriffskörper stehen dabei aber ähnlich zur Schaltstellung SP3 mit den Drehfestlegungsnuten 100b in Eingriff, so dass bezüglich der Drehzahl des Einsatzwerkzeugs 24 die Betrachtung aus dem vorherigen Abschnitt gilt. In der Mehrstufen-Kupplungsvorrichtung 36 ist in der Schaltstellung SP4 nur die Kupplungsanordnung 142b wirksam mit dem Radring 54b verbunden, so dass der Kraftfluss ungeteilt vom Radring 54b über die Kupplungsanordnung 142b auf die zweite Getriebewelle 44 übergeht. Das maximale nutzbare Arbeitsmoment MW wird demnach durch das Grenzdrehmoment MG2 der Mehrstufen-Kupplungsvorrichtung 36 begrenzt. Sind die beiden Kupplungsanordnungen 142a, 142b, wie im gezeigten Fall, identisch aufgebaut, sind die Grenzdrehmomente MG1, MG2 im Wesentlichen gleich. Es kann jedoch vorteilhaft sein, die Kupplungsanordnungen 142a, 142b mit von einander abweichenden Grenzdrehmomenten MG1', MG2' auszuführen.

Darüber hinaus sind Mehrstufen-Kupplungsvorrichtung 36 für erfindungsgemäße Mehrgang-Getriebevorrichtungen denkbar, die mehr als zwei Kupplungsanordnungen 142 aufweisen, wobei die Kupplungsanordnungen 142 über ein geeignetes Umschaltmittel 106 wählbar aktiviert und deaktiviert werden können. Weiters sind Mehrstufen-Kupplungsvorrichtungen 36 möglich, die unterschiedlich gestaltete Kupplungsanordnungen 142 umfassen. So können zumindest teilweise anstelle von radial wirkenden elastischen Rastelementen 130 auch axiale wirkende Rastanordnungen zum Einsatz kommen.

In einer besonders bevorzugten Ausführung ist das Hebelelement 76 darüber hinaus mit dem Betriebsartenschalter 18 am Maschinengehäuse 12 wirkverbunden, so dass der Benutzer die Schaltstellung des Hebelelements 76 in dafür vorgesehenen Betriebsarten des Betriebsartenschalters 18 einstellen kann. Insbesondere ist das Umschaltelement 106 über den Betriebsartenschalter 18 bedienbar ausgeführt. Der Betriebsartenschalter 18 wirkt so als eine Auswahleinrichtung 151, mit der Benutzer zwischen den mindestens zwei Übersetzungsverhältnissen GR1, GR2 und/oder den mindestens zwei Grenzdrehmomenten MG1, MG2 der Mehrgang-Getriebevorrichtung auswählen kann.

In einer bevorzugten Weiterentwicklung weist die Betätigungsvorrichtung 68 mindestens eine Aktoreinheit, insbesondere eine elektrisch antreibbare Aktoreinheit auf, durch welche das Umschaltmittel 106 zwischen den verschiedenen Schaltstellungen bewegt werden kann. Die Aktoreinheit ermöglicht die Bereitstellung einer erfindungsgemäßen Werkzeugmaschine mit einer elektronischen Kontroll- und/oder Regeleinheit, die eine Umschaltung zwischen verschiedenen Gängen und/oder Grenzdrehmomenten der erfindungsgemäßen Mehrgang-Getriebevorrichtung 34 auslösen kann.

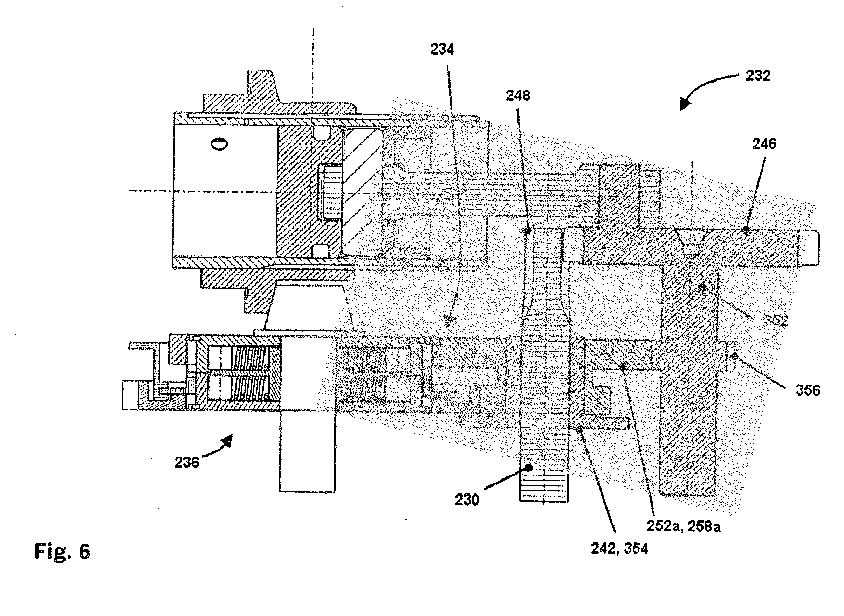

Figur 6 zeigt die Bewegungsumwandlungsvorrichtung 232 mit einer erfindungsgemäßen Mehrgang-Getriebevorrichtung 234 als zweites Ausführungsbeispiel. Gleiche oder gleichwirkende Merkmale erhalten hierbei ein um 200 erhöhtes Bezugszeichen.

Der Aufbau der Mehrstufen-Kupplungsvorrichtung 236 entspricht hierbei dem Aufbau des bereits beschriebenen Ausführungsbeispiels, so dass diesbezüglich auf die vorhergehende Beschreibung verwiesen wird. Das zweite Ausführungsbeispiel unterscheidet sich von der bereits bekannten Ausführungsform durch eine geänderte Anordnung der Motorwelle 230. Diese ist in einer seitlichen Ansicht, wie sie in Figur 6 dargestellt ist, parallel zwischen der zweiten Getriebewelle 244 und einer zusätzlichen Exzenterwelle 352 angeordnet. Die erste Getriebewelle 242 ist im vorliegenden Beispiel als Hohlwelle 354 ausgebildet, wobei die Motorwelle 230 frei drehbar durch die Hohlwelle 354 hindurch ragt. Auf der Hohlwelle 354 ist wiederum das schon bekannte Stufenrad 252 der Mehrgang-Getriebevorrichtung 234 drehbar gelagert angeordnet.

Das Abtriebsritzel 248 der Motorwelle 230 kämmt mit einer Stirnradverzahnung des Exzenterrads 246, wodurch die Exzenterwelle 352 in drehend antreibbar ist. Auf der Exzenterwelle 352 ist weiters ein Stirnrad 356 drehfest angeordnet, insbesondere einstückig mit der Exzenterwelle 352 ausgeführt. Das Stirnrad 356 kämmt mit dem Stirnrad 252a des Stufenrads 252, wodurch das Stufenrad 252 drehend antreibbar ist. Der weitere Aufbau der Mehrgang-Getriebevorrichtung 234 entspricht nun dem schon bekannten Ausführungsbeispiel.

Auch bezüglich der Funktionsweise sind nur kleine Unterschiede zu verzeichnen, welche sich im Wesentlich in einer erweiterten Berechnung der Drehzahl U4a, U4b des Einsatzwerkzeugs 224 in Abhängigkeit der Drehzahl U1 der Motorwelle 230 niederschlagen. Durch den Kraftfluss vom Abtriebsritzel 248 über das Exzenterrad 246 und das Stirnrad 356 auf das Stirnrad 252a wird ein zusätzliches Übersetzungsverhältnis GRT wirksam, welches durch das Stirnrad 356 und das Stirnrad 252a bestimmt ist. Das Übersetzungsverhältnis GRT hängt dabei von einem Durchmesser DT des Stirnrads 356 und dem Durchmesser D11 des Stirnrads 252a ab. Es gilt:

$$GRT = \frac{D11}{DT}$$

Für die Drehzahlen U4a, U4b des Einsatzwerkzeugs 224 folgt analog zum ersten Ausführungsbeispiel:

$$U4a = GRA \cdot U3a = GRA \cdot GRT \cdot GR1 \cdot GRM \cdot U1$$

$$U4b = GRA \cdot U3b = GRA \cdot GRT \cdot GR2 \cdot GRM \cdot U1$$

Ansonsten entspricht das zweite Ausführungsbeispiel in der Funktion dem bereits beschriebenen ersten Ausführungsbeispiel, auf dessen Beschreibung verwiesen wird.

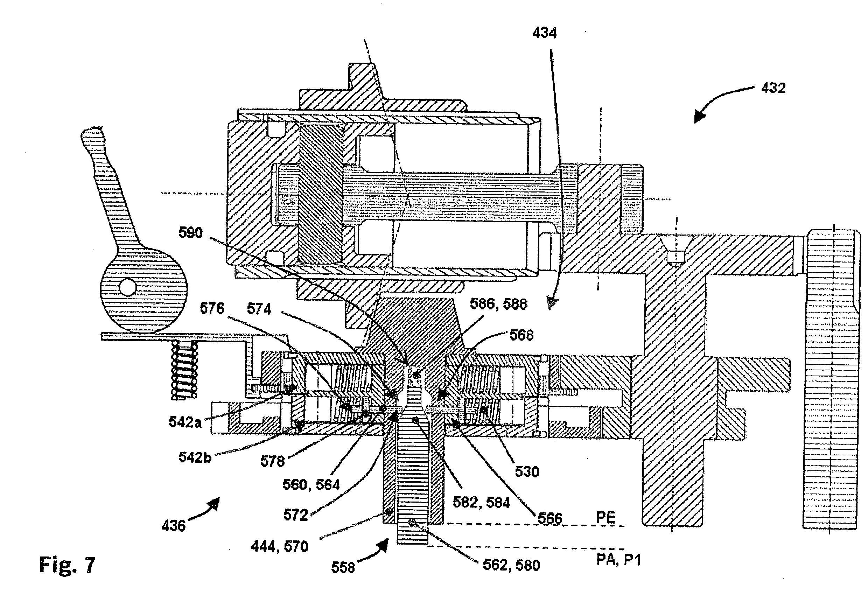

Figur 7 zeigt die Bewegungsumwandlungsvorrichtung 432 mit einer erfindungsgemäßen Mehrgang-Getriebevorrichtung 434 als drittes Ausführungsbeispiel, wobei der Aufbau, insbesondere eine Anordnung der ersten und zweiten Getriebewelle 442, 444 im Wesentlichen dem ersten Ausführungsbeispiel gleicht. Gleiche oder gleichwirkende Merkmale erhalten hierbei ein um 400 erhöhtes Bezugszeichen.

Die Mehrstufen-Kupplungsvorrichtung 436 des dritten Ausführungsbeispiels umfasst weiters eine Einstelleinrichtung 558 zur Einstellung der Rastkraft FR mindestens eines, vorzugsweise aller elastischen Rastelemente 530 wenigstens einer Kupplungsanordnung 542a, 542b. Die Einstelleinrichtung weist dazu mindestens ein Einstellmittel 560 und ein Steuerglied 562 auf. Im vorliegenden Beispiel nach Figur 7 ist das Einstellmittel 560 als Einstellschieber 564 ausgeführt. In der Kupplungsscheibe 526 ist in der Rastelementebene 527b eine Durchführung 566 für den Einstellschieber 564 vorgesehen, welche mit einer weiteren Durchführung 568 in der als Hohlwelle 570 ausgeführten zweiten Getriebewelle 444 überlappt. Der Einstellschieber 564 ist radial verschieblich in den Durchführungen 566, 568 aufgenommen. Der Einstellschieber 564 ragt dabei mit einem Ende 572 in eine Bohrung 574 der Hohlwelle 570. Ein zweites Ende 576 des Einstellschiebers 564 ragt in die Ausnehmung 128 der Kupplungsscheibe 126. Der Einstellschieber 564 weist weiters einen Abstützring 578 auf, an welchem sich das elastische Rastelement 530, insbesondere das Federelement 532 abstützt. Vorzugsweise ist für jedes elastische Rastelement 530 der Rastelementebene 527b ein Einstellschieber 564 vorgesehen. Durch eine Radialverschiebung der Einstellschieber 564 kann die Rastkraft FR der elastischen Rastelemente 530 der Rastelementebene 527b variiert werden. Insbesondere wird aus diese Weise die Rastkraft FR der Kupplungsanordnung 542b einstellbar ausgeführt, so dass das Grenzdrehmoment MG2 der Kupplungsanordnung 542b zwischen einem kleinsten Wert MG2min und einem größten Wert MG2max einstellbar ist.

In der Ausführung nach Figur 7 stützen sich die Einstellschieber 564 radial nach innen an dem als ein Steuerschieber 580 ausgeführten Steuerglied 562 ab. Der Steuerschieber 564 ist axial verschieblich in der Bohrung 574 der Hohlwelle 570 aufgenommen. An seinem, in die Bohrung 574 eingeführten Ende 582 weist der Steuerschieber 580 ein radial umlaufendes Axialprofil 584 auf. Insbesondere nimmt ein Durchmesser des Steuerschiebers 580 zur Spitze hin ab. Wird der Steuerschieber 580 axial verschoben, werden die Einstellschieber 564 in radialer Richtung in ihrer Position derart verändert, dass die Kraft der Federelemente 532 und damit die Rastkraft FR der elastischen Rastelemente 530 verändert wird.

In einer bevorzugten Ausführung ist weiters ein Rückstellelement 586 vorgesehen, welches den Steuerschieber 580 in eine bevorzugte Steuerposition P1, insbesondere eine Ausgangsposition PA zurückstellt. In der hier gezeigten Ausführung ist das Rückstellelement 586 als Schraubenfeder 588 ausgeführt, welche in Einschubrichtung des Steuerschiebers 580 vor dem Steuerschieber 580 in der Bohrung 574 aufgenommen ist. Die Schraubenfeder stützt sich dabei einerseits am eingeführten Ende 582 des Steuerschiebers 580 und andererseits an einer Anlagefläche 590 in der Hohlwelle 570 ab.

Durch ein weiteres, hier nicht gezeigtes Einstellmittel 592, welches am Maschinengehäuse 412 für den Benutzer zugänglich angeordnet ist und auf den Steuerschieber 580 derart einwirkt, dass dieser zwischen der Ausgangsposition PA und einer Endposition PE, kann der Benutzer das Grenzdrehmoment MG2 der Mehrstufen-Kupplungsvorrichtung 436 zwischen den Werten MG2min und MG2max einstellen. In einer besonders bevorzugten Ausführung ist das Einstellmittel 592 an der Auswahleinrichtung 551 angeordnet, insbesondere in die Auswahleinrichtung 551 integriert.

In einer bevorzugten Weiterentwicklung weist das Axialprofil 584 zwei, vorzugsweise mehr als zwei Durchmesserstufen auf, welche unterschiedlichen Stufungen der Rastkraft FR entsprechen.

In weiteren bevorzugten Weiterentwicklung weisen zwei, insbesondere alle Kupplungsanordnungen 542a, 542b Einstellmittel 560 auf. Dabei können die Einstellmittel 560 identisch ausgebildet sein. Es kann jedoch auch vorteilhaft sein, dass die Einstellmittel 560 verschiedener Kupplungsanordnungen 542a, 542b unterschiedliche ausgeführt sind.

Neben den hier gezeigten Einstellmitteln 560, 592 und/oder Steuergliedern 562 können auch andere mechanische und/oder elektromechanische Bewegungsübertragungselemente wie beispielsweise Hebel, Züge, Stangen, Aktoreinheiten in vorteilhafte Abwandlungen der erfindungsgemäßen Mehrgang-Getriebevorrichtungen eingesetzt werden, ohne dabei den Erfindungsgedanken zu verändern.

Weitere vorteilhafte Abwandlungen und Weiterentwicklung können sich insbesondere aus Kombinationen der Merkmale der im Vorhergehenden beschriebenen Ausführungsbeispiele ergeben.

Insbesondere kann es vorteilhaft sein, wenn die Werkzeugmaschine mit der erfindungsgemäßen Mehrgang-Getriebevorrichtung mindestens eine Anzeige- und/oder Signaleinheit aufweist, welche dem Benutzer die ausgewählte Übersetzung GR1, GR2 und/oder das ausgewählte Grenzdrehmoment MG1, MG2 anzeigt.

In einer anderen sehr vorteilhaften Weiterentwicklung, kann eine Rücksetzvorrichtung vorgesehen sein, welche die Mehrstufen-Kupplungsvorrichtung auf niedriges, vorzugsweise ein niedrigstmögliches Grenzdrehmoment zurücksetzt, insbesondere automatisch zurücksetzt.

**Patentansprüche**

1. Mehrgang-Getriebevorrichtung, insbesondere Zweigang-Getriebevorrichtung, zur Übertragung eines Antriebsdrehmoments von einer Eingangsseite auf eine Ausgangsseite mit mindestens zwei, wählbaren Übersetzungsverhältnissen und einer Mehrstufen-Kupplungsvorrichtung, insbesondere Zweistufen-Kupplungsvorrichtung, die mindestens zwei unterschiedliche, wählbare Grenzdrehmomente aufweist, wobei die Mehrgang-Getriebevorrichtung (34, 234, 434) mindestens zwei, vorzugsweise schaltbare Übersetzungsradpaare (56a, 56b, 256a, 256b, 456a, 456b) aufweist, und die Mehrstufen-Kupplungsvorrichtung (36, 236, 436) in den Übersetzungsradpaaren (56a, 56b, 256a, 256b, 456a, 456b) aufgenommen ist, wobei von jedem der mindestens zwei Übersetzungsradpaare (56a, 56b, 256a, 256b, 456a, 456b) jeweils ein erstes Übersetzungsrad (58a, 58b, 258a, 258b, 458a, 458b) auf einer ersten, die Eingangsseite (50, 250, 450) bildende Getriebewelle (42, 242, 442) und ein zweites Übersetzungsrad (60a, 60b, 260a, 260b, 460a, 460b) auf einer zweiten, die Ausgangsseite (64, 264, 464) bildende Getriebewelle (44, 244, 444) der Mehrgang-Getriebevorrichtung (34, 234, 434) angeordnet sind, und wobei die Mehrstufen-Kupplungsvorrichtung (36, 236, 436) mindestens zwei Kupplungsanordnungen (142a, 142b, 342a, 342b, 542a, 542b) aufweist, welche jeweils ein als eine, ein an einer Innenfläche (136a, 136b, 336a, 336b, 536a, 536b) vorgesehenes Rastprofil (138a, 138b, 338a, 338b, 538a, 538b) tragende Nutglocke (114a, 114b, 314a, 314b, 514a, 514b) ausgeführtes Eingangsrad (86a, 86b, 286a, 286b, 486a, 486b) umfassen, **dadurch gekennzeichnet dass** jedes Eingangsrad (86a, 86b, 286a, 286b, 486a, 486b) jeweils frei drehbar auf der zweiten Getriebewelle (44, 244, 444) angeordnet ist.

2. Mehrgang-Getriebevorrichtung nach mindestens einem der Ansprüche 1, **dadurch gekennzeichnet, dass** die ersten Übersetzungsräder (58a, 58b, 258a, 258b, 458a, 458b) der Übersetzungsradpaare (56a, 56b, 256a, 256b, 456a, 456b) drehfest mit der ersten Getriebewelle (42, 242, 442) verbunden, vorzugsweise einteilig mit dieser ausgeführt sind und insbesondere ein Stufenrad (52, 252, 452) bilden.

3. Mehrgang-Getriebevorrichtung nach mindestens einem der Ansprüche 1 oder 2, **dadurch gekennzeichnet, dass** die zweiten Übersetzungsräder (60a, 60b, 260a, 260b, 460a, 460b) der Übersetzungsradpaare (56a, 56b, 256a, 256b, 456a, 456b) als jeweils ein Radring (54a, 54b, 254a, 254b, 454a, 454b) ausgeführt sind, wobei an jedem der zweiten Übersetzungsräder (56a, 56b, 256a, 256b, 456a, 456b) Drehfestlegungsmittel (94a, 94b, 294a, 294b, 494a, 494b), insbesondere eine, vorzugsweise mehrere Drehfestlegungsnuten (100a, 100b, 300a, 300b, 500a, 500b) vorgesehen sind.

4. Mehrgang-Getriebevorrichtung nach einem der Ansprüche 1 bis 3, **dadurch gekennzeichnet, dass** jede Nutglocke (114a, 114b, 314a, 314b, 514a, 514b) einen scheibenförmigen Innenraum (116a, 116b, 316a, 316b, 516a, 516b) aufspannt, und dass die scheibenförmigen Innenräume (116a, 115b, 316a, 316b, 516a, 516b) zweier Nutglocken (114a, 114b, 314a, 314b, 514a, 514b) einander zugewandt angeordnet sind.

5. Mehrgang-Getriebevorrichtung nach mindestens einem der Ansprüche 1 bis 4, **dadurch gekennzeichnet, dass** jedes Eingangsrad (86a, 86b, 286a, 286b, 486a, 486b) der Mehrstufen-Kupplungsvorrichtung (36, 236, 436) Drehmitnahmemittel (98a, 98b, 298a, 298b, 498a, 498b), insbesondere mindestens eine, vorzugsweise mehrere Drehmitnahmenuten (102a, 102b, 302a, 302b, 502a, 502b) aufweist.

6. Werkzeugmaschine, insbesondere Handwerkzeugmaschine, mit einer Antriebseinheit (26, 226, 426), einer Werkzeugantriebswelle (38, 238, 438) und einer Mehrgang-Getriebevorrichtung (34, 234, 434) nach mindestens einem der vorhergehenden Ansprüche, **dadurch gekennzeichnet, dass** die Antriebseinheit (26, 226, 326) über die Mehrgang-Getriebevorrichtung (34, 234, 434) zu einem schaltbaren Drehantrieb der Werkzeugantriebswelle (38, 238, 438) mit der Werkzeugantriebswelle (38, 238, 438) wirkverbunden werden kann, insbesondere dass die Antriebseinheit (26, 226, 326) mit der Eingangsseite (50, 205, 450) und die Werkzeugantriebswelle (38, 238, 438) mit der Ausgangsseite (64, 264, 464) der Mehrgang-Getriebevorrichtung (34, 234, 434) gekoppelt werden kann.

7. Werkzeugmaschine nach Anspruch 6, **dadurch gekennzeichnet, dass** eine Auswahleinrichtung (151, 351, 551) vorgesehen ist, mit welcher ein Benutzer zwischen den mindestens zwei Übersetzungsverhältnissen GR1, GR2 und/oder den mindestens zwei Grenzdrehmomenten MG1, MG2 der Mehrgang-Getriebevorrichtung (34, 234, 434) auswählen kann.

8. Mehrgang-Getriebevorrichtung nach mindestens einem der Ansprüche 1 bis 5, **dadurch gekennzeichnet, dass** die Eingangsräder (86a, 86b, 286a, 286b, 486a, 486b) der Mehrstufen-Kupplungsvorrichtung (36, 236, 436) eine Kupplungsscheibe (126, 326, 526) aufnehmen, wobei die Kupplungsscheibe (126, 326, 526) mindestens zwei Rastelementebenen (127a, 127b, 327a, 327b, 527a, 527b) aufweist, auf welchen jeweils elastische Rastelemente (130, 330, 530) angeordnet sind, und die Kupplungsscheibe (126, 326, 526) drehfest mit der zweiten Getriebewelle (44, 244, 444) verbunden ist.

9. Mehrgang-Getriebevorrichtung nach Anspruch 8, **dadurch gekennzeichnet, dass** die elastischen Rastelemente (130, 330, 530) jeder Rastelementebene (127a, 127b, 327a, 327b, 527a, 527b) mit dem Rastprofil (138a, 138b, 338a, 338b, 538a, 538b) genau eines Eingangsrads (86a, 86b, 286a, 286b, 486a, 486b) so zusammenwirken, dass bei einer Drehbewegung des jeweiligen Eingangsrads (86a, 86b, 286a, 286b, 486a, 486b) um eine zweite Getriebeachse (144, 344, 544) ein maximales Grenzdrehmoment zwischen dem Eingangsrad (86a, 86b, 286a, 286b, 486a, 486b) und der Kupplungsscheibe (126, 326, 526) übertragbar ist.

10. Mehrgang-Getriebevorrichtung nach mindestens einem Ansprüche 8 oder 9, **dadurch gekennzeichnet, dass** mindestens ein Einstellmittel vorgesehen ist, mit welchem eine Rastkraft FR der elastischen Rastelemente wenigstens einer Rastelementebene eingestellt, insbesondere zwischen wenigstens zwei Rastkräften FR1, FR2 eingestellt werden kann.

11. Werkzeugmaschine, insbesondere Handwerkzeugmaschine, mit einer Antriebseinheit (26, 226, 426), einer Werkzeugsantriebswelle (38, 238, 438) und einer Mehrgang-Getriebevorrichtung (34, 234, 434) nach mindestens einem der Ansprüche 8 bis 10, **dadurch gekennzeichnet, dass** die Antriebseinheit (26, 226, 326) über die Mehrgang-Getriebevorrichtung (34, 234, 434) zu einem schaltbaren Drehantrieb der Werkzeugantriebswelle (38, 238, 438) mit der Werkzeugantriebswelle (38, 238, 438) wirkverbunden werden kann, insbesondere dass die Antriebseinheit (26, 226, 326) mit der Eingangsseite (50, 205, 450) und die Werkzeugantriebswelle (38, 238, 438) mit der Ausgangsseite (64, 264, 464) der Mehrgang-Getriebevorrichtung (34, 234, 434) gekoppelt werden kann, und dass eine Einstelleinrichtung (158, 358, 558) vorgesehen ist, über welche der Benutzer an einem Einstellmittel (192, 392, 592) die Rastkraft FR mindestens eines, vorzugsweise aller elastischen Rastelemente (130, 330, 530) wenigstens einer Kupplungsanordnung (142a, 142b, 342a, 342b, 542a, 542b) einstellen kann.

12. Werkzeugmaschine nach Anspruch 11, **dadurch gekennzeichnet, dass** eine Auswahleinrichtung (151, 351, 551) vorgesehen ist, mit welcher ein Benutzer zwischen den mindestens zwei Übersetzungsverhältnissen GR1, GR2 und/oder den mindestens zwei Grenzdrehmomenten MG1, MG2 der Mehrgang-Getriebevorrichtung (34, 234, 434) auswählen kann und wobei das Einstellmittel (192, 392, 592) mit der Auswahleinrichtung (151, 351, 551) zusammenwirkt, insbesondere in diese integriert ist.

**Claims**

1. Multi-gear transmission device, in particular two-gear transmission device, for transferring a drive torque from an input side to an output side, with at least two selectable step-up ratios and with a multi-step clutch device, in particular two-step clutch device, which has at least two different selectable limit torques, the multi-gear transmission device (34, 234, 434) having at least two preferably shiftable pairs of step-up wheels (56a, 56b, 256a, 256b, 456a, 456b), and the multi-step clutch device (36, 236, 436) being received in the pairs of step-up wheels (56a, 56b, 256a, 256b, 456a, 456b), wherein in each case a first step-up wheel (58a, 58b, 258a, 258b, 458a, 458b) of each of the at least two pairs of step-up wheels (56a, 56b, 256a, 256b, 456a, 456b) is arranged on a first transmission shaft (42, 242, 442) which forms the input side (50, 250, 450) and a second step-up wheel (60a, 60b, 260a, 260b, 460a, 460b) is arranged on a second transmission shaft (44, 244, 444), which forms the output side (64, 264, 464), of the multi-gear transmission device (34, 234, 434), and wherein the multi-step clutch device (36, 236, 436) has at least two clutch arrangements (142a, 142b, 342a, 342b, 542a, 542b) which comprise in each case an input wheel (86a, 86b, 286a, 286b, 486a, 486b) designed as a grooved bell (114a, 114b, 314a, 314b, 514a, 514b) carrying a latching profile (138a, 138b, 338a, 338b, 538a, 538b) provided on an inner face (136a, 136b, 336a, 336b, 536a, 536b), **characterized in that** each input wheel (86a, 86b, 286a, 286b, 486a, 486b) is arranged in each case freely rotatably on the second transmission shaft (44, 244, 444).

2. Multi-gear transmission device according to Claim 1, **characterized in that** the first step-up wheels (58a, 58b, 258a, 258b, 458a, 458b) of the pairs of step-up wheels (56a, 56b, 256a, 256b, 456a, 456b) are connected fixedly in terms of rotation to the first transmission shaft (42, 242, 442), preferably are formed in one part with the latter, and, in particular, constitute a step wheel (52, 252, 452).

3. Multi-gear transmission device according to at least one of Claims 1 and 2, **characterized in that** the second step-up wheels (60a, 60b, 260a, 260b, 460a, 460b) of the pairs of step-up wheels (56a, 56b, 256a, 256b, 456a, 456b) are designed in each case as a wheel ring (54a, 54b, 254a, 254b, 454a, 454b), anti-rotation means (94a, 94b, 294a, 294b, 494a, 494b), in particular one, preferably a plurality of anti-rotation grooves (100a, 100b, 300a, 300b, 500a, 500b), being provided on each of the second step-up wheels (56a, 56b, 256a, 256b, 456a, 456b).

4. Multi-gear transmission device according to one of Claims 1 to 3, **characterized in that** each grooved bell (114a, 114b, 314a, 314b, 514a, 514b) spans a disc-shaped inner space (116a, 116b, 316a, 316b, 516a, 516b), and **in that** the disc-shaped inner spaces (116a, 116b, 316a, 316b, 516a, 516b) of two grooved bells (114a, 114b, 314a, 314b, 514a, 514b) are arranged so as to face one another.

5. Multi-gear transmission device according to at least one of Claims 1 to 4, **characterized in that** each input wheel (86a, 86b, 286a, 286b, 486a, 486b) of the multi-step clutch device (36, 236, 436) has rotation take-up means (98a, 98b, 298a, 298b, 498a, 498b), in particular at least one, preferably a plurality of rotation take-up grooves (102a, 102b, 302a, 302b, 502a, 502b).

6. Power tool, in particular hand power tool, with a drive unit (26, 226, 426), with a tool driveshaft (38, 238, 438) and with a multi-gear transmission device (34, 234, 434) according to at least one of the preceding claims, **characterized in that** the drive unit (26, 226, 326) can be operatively connected to the tool driveshaft (38, 238, 438) via the multi-gear transmission device (34, 234, 434) to form a switchable rotary drive of the tool driveshaft (38, 238, 438), in particular **in that** the drive unit (26, 226, 326) can be coupled to the input side (50, 250, 450) and the tool driveshaft (38, 238, 438) to the output side (64, 264, 464) of the multi-gear transmission device (34, 234, 434).

7. Power tool according to Claim 6, **characterized in that** a selection device (151, 351, 551) is provided, by means of which a user can select between the at least two step-up ratios GR1, GR2 and/or the at least two limit torques MG1, MG2 of the multi-gear transmission device (34, 234, 434).

8. Multi-gear transmission device according to at least one of Claims 1 to 5, **characterized in that** the input wheels (86a, 86b, 286a, 286b, 486a, 486b) of the multi-step clutch device (36, 236, 436) receive a clutch disc (126, 326, 526), the clutch disc (126, 326, 526) having at least two latching element planes (127a, 127b, 327a, 327b, 527a, 527b), on which in each case elastic latching elements (130, 330, 530) are arranged, and the clutch disc (126, 326, 526) being connected fixedly in terms of rotation to the second transmission shaft (44, 244, 444).

9. Multi-gear transmission device according to Claim 8, **characterized in that** the elastic latching elements (130, 330, 530) of each latching element plane (127a, 127b, 327a, 327b, 527a, 527b) cooperate with the latching profile (138a, 138b, 338a, 338b, 538a, 538b) of exactly one input wheel (86a, 86b, 286a, 286b, 486a, 486b) such that, during a rotational movement of the respective input wheel (86a, 86b, 286a, 286b, 486a, 486b) about a second transmission axis (144, 344, 544), a maximum limit torque can be transferred between the input wheel (86a, 86b, 286a, 286b, 486a, 486b) and the clutch disc (126, 326, 526).

10. Multi-gear transmission device according to at least one of Claims 8 and 9, **characterized in that** at least one setting means is provided, by means of which a latching force FR of the elastic latching elements of at least one latching element plane can be set, in particular can be set between at least two latching forces FR1, FR2.

11. Power tool, in particular hand power tool, with a drive unit (26, 226, 420), with a tool driveshaft (38, 238, 438) and with a multi-gear transmission device (34, 234, 434) according to at least one of Claims 8 to 10, **characterized in**

**that** the drive unit (26, 226, 326) can be operatively connected to the tool driveshaft (38, 238, 438) via the multi-gear transmission device (34, 234, 434) to form a switchable rotary drive of the tool driveshaft (38, 238, 438), in particular **in that** the drive unit (26, 226, 326) can be coupled to the input side (50, 250, 450) and the tool driveshaft (38, 238, 438) to the output side (64, 264, 464) of the multi-gear transmission device (34, 234, 434), and **in that** a setting device (158, 358, 558) is provided, via which the user can set at a setting means (192, 392, 592) the latching force FR of at least one, preferably all of the elastic latching elements (130, 330, 530) of at least one clutch arrangement (142a, 142b, 342a, 342b, 542a, 542b).

12. Power tool according to Claim 11, **characterized in that** a selection device (151, 351, 551) is provided, by means of which a user can select between the at least two step-up ratios GR1, GR2 and/or between the at least two limit torques MG1, MG2 of the multi-gear transmission device (34, 234, 434), the setting means (192, 392, 592) cooperating with the selection device (151, 351, 551), in particular being integrated into the latter.

**Revendications**

1. Dispositif de transmission à plusieurs vitesses, en particulier dispositif de transmission à deux vitesses, pour transmettre un couple d'entraînement d'un côté d'entrée à un côté de sortie, comprenant au moins deux rapports de multiplication sélectionnables et un dispositif d'embrayage à plusieurs étages, en particulier un dispositif d'embrayage à deux étages qui présente au moins deux moments limite sélectionnables différents, le dispositif de transmission à plusieurs vitesses (34, 234, 434) comprenant au moins deux paires de roues de multiplication (56a, 56b, 256a, 256b, 456a, 456b) de préférence commutable et le dispositif d'embrayage à plusieurs étages (36, 236, 436) étant reçu dans les paires de roues de multiplication (56a, 56b, 256a, 256b, 456a, 456b), parmi chacune des au moins deux paires de roues de multiplication (56a, 56b, 256a, 256b, 456a, 456b), à chaque fois une première roue de multiplication (58a, 58b, 258a, 258b, 458a, 458b) étant disposée sur un premier arbre de transmission (42, 242, 442) formant le côté d'entrée (50, 250, 450) et une deuxième roue de multiplication (60a, 60b, 260a, 260b, 460a, 460b) étant disposée sur un deuxième arbre de transmission (44, 244, 444) formant le côté de sortie (64, 264, 464) du dispositif de transmission à plusieurs vitesses (34, 234, 434) et le dispositif d'embrayage à plusieurs étages (36, 236, 436) comprenant au moins deux agencements d'embrayage (142a, 142b, 342a, 342b, 542a, 542b) qui comportent respectivement une roue d'entrée (86a, 86b, 286a, 286b, 486a, 486b) réalisée sous forme de carter rainuré (114a, 114b, 314a, 314b, 514a, 514b) portant un profil d'encliquetage (138a, 138b, 338a, 338b, 538a, 538b) prévu sur une surface intérieure (136a, 136b, 336a, 336b, 536a, 536b), **caractérisé en ce que** chaque roue d'entrée (86a, 86b, 286a, 286b, 486a, 486b) est respectivement disposée de manière librement rotative sur le deuxième arbre de transmission (44, 244, 444).

2. Dispositif de transmission à plusieurs vitesses selon la revendication 1, **caractérisé en ce que** les premières roues de multiplication (58a, 58b, 258a, 258b, 458a, 458b) des paires de roues de multiplication (56a, 56b, 256a, 256b, 456a, 456b) sont reliées de manière solidaire en rotation au premier arbre de transmission (42, 242, 442), de préférence réalisées d'une seule pièce avec celui-ci et forment en particulier une roue étagée (52, 252, 452).

3. Dispositif de transmission à plusieurs vitesses selon au moins l'une des revendications 1 et 2, **caractérisé en ce que** les deuxièmes roues de multiplication (60a, 60b, 260a, 260b, 460a, 460b) des paires de roues de multiplication (56a, 56b, 256a, 256b, 456a, 456b) sont respectivement réalisées sous forme de bague de roue (54a, 54b, 254a, 254b, 454a, 454b), des moyens de solidarisation en rotation (94a, 94b, 294a, 294b, 494a, 494b), en particulier une, de préférence plusieurs rainures de solidarisation en rotation (100a, 100b, 300a, 300b, 500a, 500b) étant prévus sur chacune des deuxièmes roue de multiplication (56a, 56b, 256a, 256b, 456a, 456b).

4. Dispositif de transmission à plusieurs vitesses selon l'une quelconque des revendications 1 à 3, **caractérisé en ce que** chaque carter rainuré (114a, 114b, 314a, 314b, 514a, 514b) enjambe un espace intérieur (116a, 116b, 316a, 316b, 516a, 516b) en forme de disque et **en ce que** les espaces intérieurs (116a, 116b, 316a, 316b, 516a, 516b) en forme de disque de deux carters rainurés (114a, 114b, 314a, 314b, 514a, 514b) sont disposés de manière tournée l'un vers l'autre.

5. Dispositif de transmission à plusieurs vitesses selon au moins l'une quelconque des revendications 1 à 4, **caractérisé en ce que** chaque roue d'entrée (86a, 86b, 286a, 286b, 486a, 486b) du dispositif d'embrayage à plusieurs étages (36, 236, 436) comprend des moyens d'entraînement en rotation (98a, 98b, 298a, 298b, 498a, 498b), en particulier au moins une, de préférence plusieurs rainures d'entraînement en rotation (102a, 102b, 302a, 302b, 502a, 502b).

**6.** Machine-outil, en particulier machine-outil à main, comprenant une unité d'entraînement (26, 226, 426), un arbre d'entraînement d'outil (38, 238, 438) et un dispositif de transmission à plusieurs vitesses (34, 234, 434) selon au moins l'une quelconque des revendications précédentes, **caractérisée en ce que** l'unité d'entraînement (26, 226, 326) peut être en liaison fonctionnelle avec l'arbre d'entraînement d'outil (38, 238, 438) au moyen du dispositif de transmission à plusieurs vitesses (34, 234, 434) pour former un entraînement en rotation commutable de l'arbre d'entraînement d'outil (38, 238, 438), en particulier **en ce que** l'unité d'entraînement (26, 226, 326) peut être accouplée au côté d'entrée (50, 250, 450) et l'arbre d'entraînement d'outil (38, 238, 438) peut être accouplé au côté de sortie (64, 264, 464) du dispositif de transmission à plusieurs vitesses (34, 234, 434).

**7.** Machine-outil selon la revendication 6, **caractérisée en ce qu'**un dispositif de sélection (151, 351, 551) est prévu, à l'aide duquel un utilisateur peut choisir entre les au moins deux rapports de multiplication GR1, GR2 et/ou les au moins deux couples limite MG1, MG2 du dispositif de transmission à plusieurs vitesses (34, 234, 434).

**8.** Dispositif de transmission à plusieurs vitesses selon au moins l'une quelconque des revendications 1 à 5, **caractérisé en ce que** les roues d'entrée (86a, 86b, 286a, 286b, 486a, 486b) du dispositif d'embrayage à plusieurs étages (36, 236, 436) reçoivent un disque d'embrayage (126, 326, 526), le disque d'embrayage (126, 326, 526) comprenant au moins deux plans d'éléments d'encliquetage (127a, 127b, 327a, 327b, 527a, 527b) sur lesquels sont respectivement disposés des éléments d'encliquetage élastiques (130, 330, 530) et le disque d'embrayage (126, 326, 526) étant relié de manière solidaire en rotation au deuxième arbre de transmission (44, 244, 444).

**9.** Dispositif de transmission à plusieurs vitesses selon la revendication 8, **caractérisé en ce que** les éléments d'encliquetage élastiques (130, 330, 530) de chaque plan d'éléments d'encliquetage (127a, 127b, 327a, 327b, 527a, 527b) coopèrent avec le profil d'encliquetage (138a, 138b, 338a, 338b, 538a, 538b) d'exactement une roue d'entrée (86a, 86b, 286a, 286b, 486a, 486b) de telle sorte que, lors d'un mouvement de rotation de la roue d'entrée respective (86a, 86b, 286a, 286b, 486a, 486b) autour d'un deuxième axe de transmission (144, 344, 544), un couple limite maximal puisse être transmis entre la roue d'entrée (86a, 86b, 286a, 286b, 486a, 486b) et le disque d'embrayage (126, 326, 526).

**10.** Dispositif de transmission à plusieurs vitesses selon au moins l'une quelconque des revendications 8 et 9, **caractérisé en ce qu'**au moins un moyen de réglage est prévu, à l'aide duquel une force d'encliquetage FR des éléments d'encliquetage élastiques d'au moins un plan d'éléments d'encliquetage peut être réglée, en particulier peut être réglée entre au moins deux forces d'encliquetage FR1, FR2.

**11.** Machine-outil, en particulier machine-outil à main, comprenant une unité d'entraînement (26, 226, 426), un arbre d'entraînement d'outil (38, 238, 438) et un dispositif de transmission à plusieurs vitesses (34, 234, 434) selon au moins l'une quelconque des revendications 8 à 10, **caractérisée en ce que** l'unité d'entraînement (26, 226, 326) peut être en liaison fonctionnelle avec l'arbre d'entraînement d'outil (38, 238, 438) au moyen du dispositif de transmission à plusieurs vitesses (34, 234, 434) pour former un entraînement en rotation commutable de l'arbre d'entraînement d'outil (38, 238, 438), en particulier **en ce que** l'unité d'entraînement (26, 226, 326) peut être accouplée au côté d'entrée (50, 250, 450) et l'arbre d'entraînement d'outil (38, 238, 438) peut être accouplé au côté de sortie (64, 264, 464) du dispositif de transmission à plusieurs vitesses (34, 234, 434), et **en ce qu'**un dispositif de réglage (158, 358, 558) est prévu, à l'aide duquel l'utilisateur peut régler sur un moyen de réglage (192, 392, 592) la force d'encliquetage FR d'au moins un, de préférence de tous les éléments d'encliquetage élastiques (130, 330, 530) d'au moins un agencement d'embrayage (142a, 142b, 342a, 342b, 542a, 542b).

**12.** Machine-outil selon la revendication 11, **caractérisée en ce qu'**un dispositif de sélection (151, 351, 551) est prévu, à l'aide duquel un utilisateur peut choisir entre les au moins deux rapports de multiplication GR1, GR2 et/ou les au moins deux couples limite MG1, MG2 du dispositif de transmission à plusieurs vitesses (34, 234, 434) et le moyen de réglage (192, 392, 592) coopérant avec le dispositif de sélection (151, 351, 551), en particulier étant intégré dans celui-ci.

EP 2 291 589 B1

Fig. 1

Fig. 2

Fig. 3

62, 64

44

122a

122b

76

94a, 100a

92a, 93a

54a, 60a

86a, 114a

96a, 97a

98a, 102a

132

70, 72

126

128

134

127a

148

74

146

112

106, 108

150

127b

136b, 138b

140b

98a, 102a

86b, 114b

96b, 97b

92b, 93b

94b, 100b

54b, 60b

**Fig. 4**

Fig. 5c

Fig. 5d

Fig. 5a

Fig. 5b

Fig. 6

EP 2 291 589 B1

Fig. 7

**EP 2 291 589 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1163980 A2
- DE 3832302 C1
- DE 4302083 A1